# EUROPEAN PATENT SPECIFICATION

(11) **EP 2 597 744 B1**
(45) Date of publication and mention of the grant of the patent: **07.01.2015**
(21) Application number: 11190438.9
(22) Date of filing: 24.11.2011
(51) Int. Cl.: H02G 15/013, H02G 15/113

(54) **Cable closure**
Kabelende
Fermeture de câble

(43) Date of publication of application: 29.05.2013
(73) Proprietor: CCS Technology, Inc., Wilmington, DE 19803 (US)
(72) Inventor: Badura, Stefan, Dipl.-Ing., 58708 Menden (DE); Osoba, Markus, 58300 Wetter (DE); Kittler, Lars, Dipl.-Ing., 58239 Schwerte (DE); Breuer-Heckel, Mike, Dipl.-Ing., 44143 Dortmund (DE)
(74) Representative: Sturm, Christoph

(56) References cited:
- EP-A1- 0 942 303
- WO-A1-99/56370
- US-A1- 2005 167 431

## Description

The present patent application relates to a cable closure in accordance with the preamble of claim 1.

Cable closures are used in telecommunications cable networks for protecting spliced joints at connection points between telecommunications cables and for protecting branch points or splitting points of telecommunications cables. In this case, the cable closures are intended to ensure the continuity of the telecommunications cables as though the telecommunications cables had not been interrupted. The product catalog "Accessories for Fiber Optic Networks", Edition 1, page 75, Corning Cable Systems, year 2001" discloses cable closures firstly in the form of inline cable closures and secondly in the form of dome cable closures, which all have a housing that defines an interior of the cable closure and seals off the interior thereof from the outside. Conventionally, assemblies for connecting, namely for splicing, telecommunications conductors guided in telecommunications cables are arranged in the interior defined by the housing of the cable closure.

In the case of cable closures in the form of dome cable closures, the housing is formed by a dome-like covering body and by a sealing body, the sealing body defining cable insertion regions, which are sealed off on one side of the dome-like covering body and via which all of the cables can be inserted into the interior of the cable closure. In the case of cable closures in the form of inline cable closures, cable insertion regions which are sealed off on two opposite sides of the covering body are formed for inserting cables into the interior of the cable closure, with the result that inline cable closures can be installed in one line with the cables.

DE 20 2010 006 582 U1 discloses an inline cable closure, having a housing, which delimits an interior of the cable closure and seals off the cable closure toward the outside, the housing comprising a covering body, the covering body comprises shells and provides on mutually opposite sides of the same cable insertion regions for inserting cables into the interior of the cable closure and/or for passing cables out of the interior of the cable closure. According to DE 20 2010 006 582 U1 compressible and/or deformable sealing elements are positioned at the mutually opposite sides of the covering body in the region of the cable insertion regions of the shells, wherein each of the sealing elements is positioned between barrier walls of the respective shell, namely between a barrier wall facing the interior of the cable closure and a barrier wall remote from the interior of the cable closure.

WO 99/56370 A1 discloses an inline cable closure with the features of the preamble of claim 1.

Other prior art is disclosed by US 2005/0167431 A1 and by EP 0 942 303 A1.

Against this background, the present patent application provides a novel cable closure having improved sealing properties.

This is accomplished by the features of the characterizing portion of claim 1.

The embedded resilient fingers or flaps of the spring elements in combination with the embedded protrusions keep the compressible and/or deformable sealing element in place during operation or during testing of the cable closure over a wide temperature range. The embedded resilient fingers or flaps of the spring elements combination with the embedded protrusions decrease an axial sliding of the sealing element in longitudinal direction of the respective cable which may be caused by thermal expansion of the compressible and/or deformable sealing element. This minimizes the risk that the sealing elements become damaged during operation or testing and improves the sealing properties of the cable closure.

Preferably, the sealing elements in which the resilient fingers or flaps of the spring elements are embedded comprise adjacent to the embedded resilient fingers or flaps of each spring element recesses having a generally narrowing cross section. This improves further the sealing properties of the cable closure.

Preferably, the resilient fingers or flaps of the spring elements provide resilient fans, whereby the fans have a generally narrowing cross section. This improves further the sealing properties of the cable closure.

Exemplary embodiments of the invention will be explained in more detail, without any restriction being imposed, with reference to the drawing, in which:
- Figure 1: shows a perspective view of a preferred exemplary embodiment of a cable closure in form of an inline cable closure in a closed status of the same;
- Figure 2: shows a perspective view of the inline cable closure shown in figure 1 in an opened status of the same;
- Figure 3a: shows a detail of a first, upper shell of the inline cable closure;
- Figure 3b: shows a second view of the detail of figure 3a;
- Figure 4a: shows a detail of a second, lower shell of the inline cable closure;
- Figure 4b: shows a second view of the detail of figure 4a;
- Figure 5a: shows a first perspective view of a second segment of a barrier wall used in the first, lower shell of the inline cable closure;
- Figure 5b: shows a second perspective view of the second segment of the barrier wall of figure 5a;
- Figure 6a: shows a first perspective view of a second segment of a barrier wall used in the second, upper shell of the inline cable closure;
- Figure 6b: shows a second perspective view of the second segment of the barrier wall of figure 6a;
- Figure 7a: shows a first perspective view of an alternative second segment of a barrier wall used in the second, upper shell of the inline cable closure;
- Figure 7b: shows a second perspective view of the second segment of the barrier wall of figure 7a;
- Figure 8: shows an alternative of the detail of figure 3b; and
- Figure 9: shows another alternative of the detail of figure 3b.

The present invention relates to a cable closure 10 preferably for copper cables or fiber optic cables or hybrid cables, which in the preferred exemplary embodiment shown is an inline cable closure. The cable closure 10 comprises a housing which is formed by a covering body 13 composed of two shells 11 and 12.

In the exemplary embodiment shown, the shells 11 and 12 are half-shells and the half-shell 11 is a so-called lower half-shell and the half-shell 12 is a so-called upper half-shell of the covering body 13, which together define an interior 14 of the inline cable closure 10. Cable insertion regions 17 are formed on mutually opposite sides 15 and 16 of the inline cable closure 10 or the covering body 13, with it being possible for cables to be inserted into the interior 14 of the inline cable closure 10 or passed out of the interior 14.

In the exemplary embodiment shown, in each case two cable insertion regions 17 for inserting in each case one cable into the interior 14 of the inline cable closure 10 are formed on both mutually opposite sides 15 and 16 of the covering body 13.

In the shown embodiment, the two half-shells 11 and 12 are hinged together at first longitudinal sides 18, 19 of the same. The half-shells 11 and 12 can be pivoted with respect to each other around a hinge 20 by which the two half-shells 11 and 12 are fixed to each other at the first longitudinal sides 18, 19 of the same. When the inline cable closure 10 is closed, the other second longitudinal sides 21, 22 of the two half-shells 11 and 12 can be secured to each other by a closing mechanism such as a latch, a hook, a pin or the like (not shown).

In order to ensure that the cables to be inserted into the interior 14 of the inline cable closure 10 via the cable insertion regions 17 are sealed off, compressible and/or deformable sealing elements 23 and 24, which are each arranged between barrier walls 25 and 26, are positioned in the region of both mutually opposite sides 15 and 16 of the covering body 13 of the inline cable closure 10 on which the cable insertion regions 17 are formed. The sealing elements 23 are associated with the lower half-shell 11 and the sealing elements 24 are associated with the upper half-shell 12. A first barrier wall 25 is in each case, namely on both mutually opposite sides 15 and 16 in the region of the lower half-shell 11 and in the region of the upper half-shell 12, remote from the interior 14 of the inline cable closure 10 while a second barrier wall 26 is in each case facing the interior 14 of the cable closure 10.

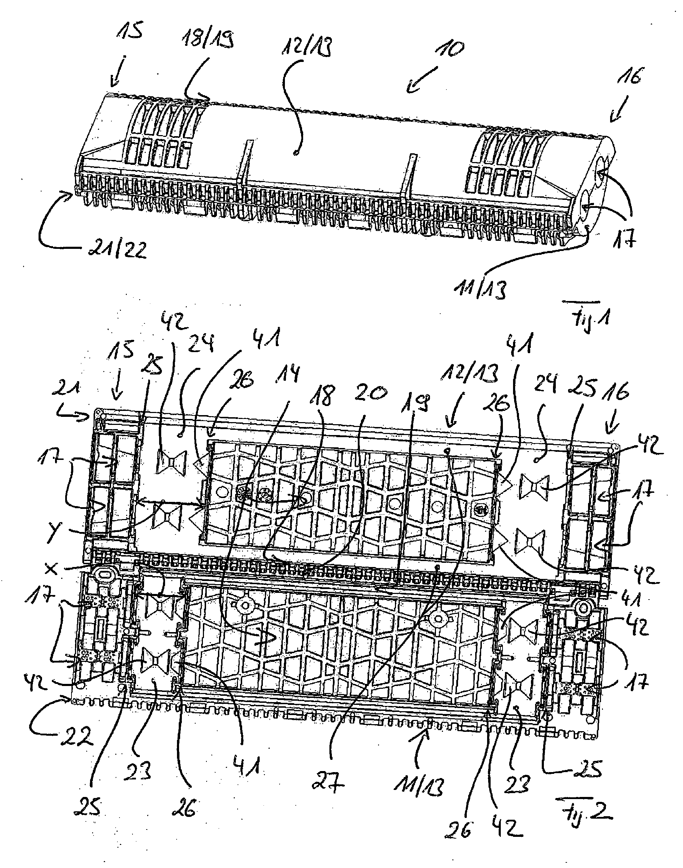

As shown in Figure 2, the compressible and/or deformable sealing elements 24 of the upper half-shell 12, which are associated with the cable insertion regions 17, are coupled via compressible and/or deformable sealing elements 27, which run parallel to longitudinal sides 18, 21 of the upper half-shell 12. As a result, a closed, preferably rectangular-framed, sealing region is formed by the sealing elements 24 and 27 in the region of the upper half-shell 12. Possibly, an analogous sealing region can also be formed in the region of the lower half-shell 11.

The compressible and/or deformable sealing elements 24 and possibly 27 are preferably gel-like sealing elements, for example polyurethane gels or silicone gels. Such gel-like sealing elements are deformable and can be compressible. It is also possible to use sealing elements 24 which are partially composed of different materials, for example from a deformable, gel-like sealing material and from a foam-like compressible sealing material.

Each of the barrier walls 25 and 26 of said half-shells 11 and 12 comprises a first segment 28 being fixedly attached to the respective half-shell 11, 12 and at least one second segment 29 being a separate component from the first segment 28 of the respective barrier wall 25, 26. The or each second segment 29 is separately formed from the respective first segment 28. In other words, the or each second segment 29 is disjoined from the respective first segment 28. The first segment 28 of each barrier wall 25, 26 provides pocket-like openings 30 for receiving the respective second segment 29.

The first segments 28 and the second segments 29 of the barrier walls 25 and 26 extend almost transversely or in general perpendicular with respect to the insertion direction of the cable insertion regions 17. The barrier walls 25, 26 and the insertion direction of the cable insertion regions 17 confine an angle between 85° and 95°, preferably an angle between 87° and 93°. These ranges are merely provided as examples.

In the region of the lower half-shell 11 a middle section 31 of the first segment 28 of each barrier wall 25, 26 being positioned between two adjacent second segments 29 is T-shaped having a protrusion 32 running almost in parallel with respect to the insertion direction of the cable insertion regions 17.

As can be best seen in Figures 2, 3a and 4a, in the region of each of the mutually opposite sides 15, 16 of a first one of the half-shells 11, 12 of the covering body 13, namely in the region of the lower half-shell 11, the distance x between the respective barrier wall 26 facing the interior 14 of the cable closure and the respective barrier wall 25 remote from the interior 14 of the cable closure 10 is smaller than the respective distance y between the barrier walls 25, 26 in the region of each of the mutually opposite sides 15, 16 of a second one of the half-shells 11, 12 of the covering body 13, namely in the region of the upper half-shell 12. The distances x and y are preferably dimensioned according to the following relationship: 1,2 ≤ y/x ≤ 1,7, more preferably 1,3 ≤ y/x ≤ 1,6. These ranges are merely provided as examples.

When the covering body 13 of the housing is closed by bringing the half-shells 11 and 12 in the position shown in Figure 1, edges 33 of the barrier walls 25 and 26 of the first, lower half-shell 11 extending almost or in general transversely with respect to the insertion direction of the cable insertion regions 17 contact, namely compress and/or deform, the respective compressible and/or deformable sealing element 24 positioned between of the barrier walls 25, 26 of the second, upper half-shell 12. Further on, edges 34 of the barrier walls 25 and 26 of the first, lower half-shell 11 extending almost in parallel or in general in longitudinal direction to the insertion direction of the cable insertion regions 17 contact, namely compress and/or deform, the respective compressible and/or deformable sealing element 24 positioned between of the barrier walls 25, 26 of the second, upper half-shell 12. The edges 34 extending almost in parallel or in longitudinal direction to the insertion direction of the cable insertion regions 17 are provided by the protrusion 32 of the T-shaped middle sections 31 of the first segments 28 of the barrier walls 25, 26.

Thereby the compressible and/or deformable sealing element 24 becomes compressed and/or deformed so that the respective cable insertion region 17 is sealed even in the case that no cable is to be handled in the respective cable insertion region 17.

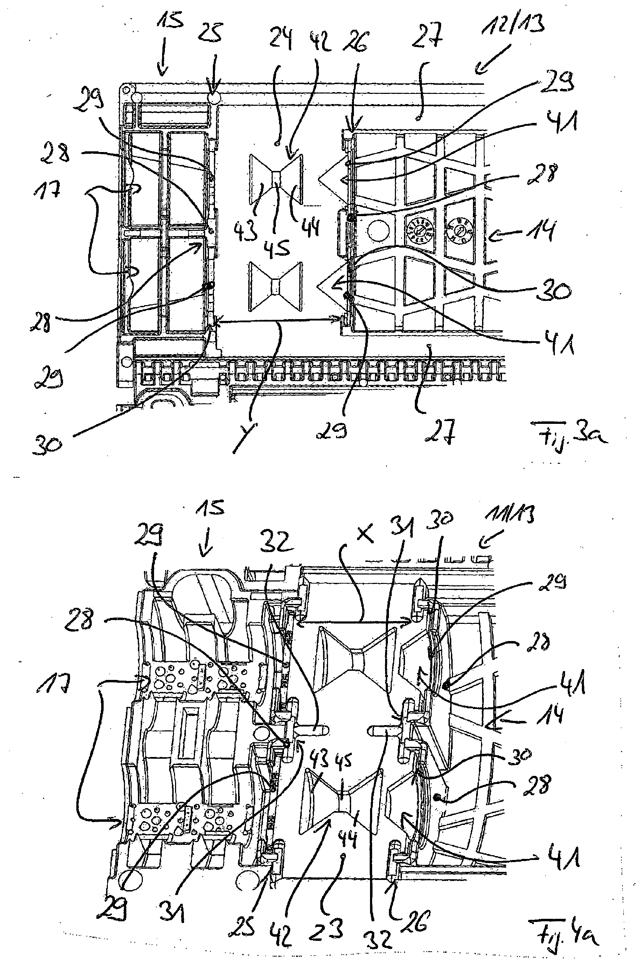

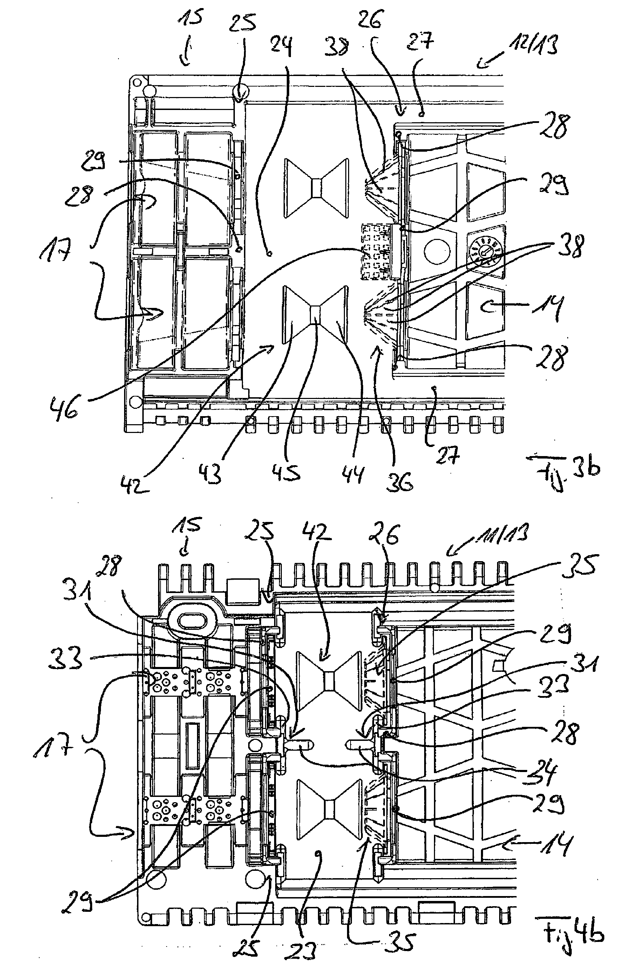

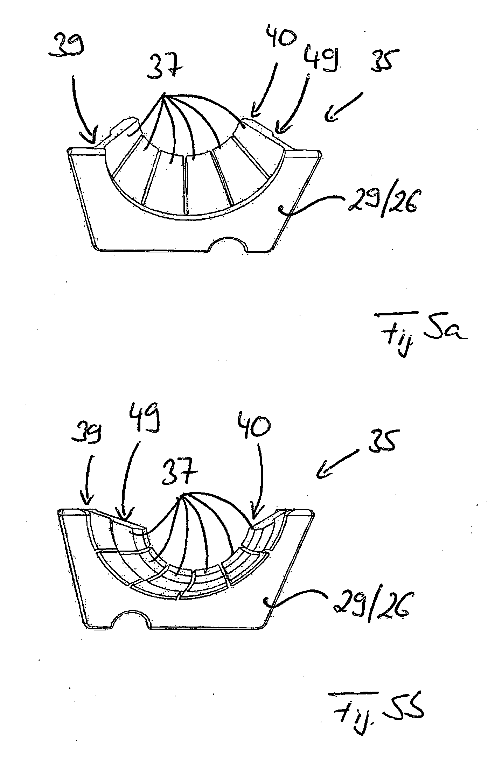

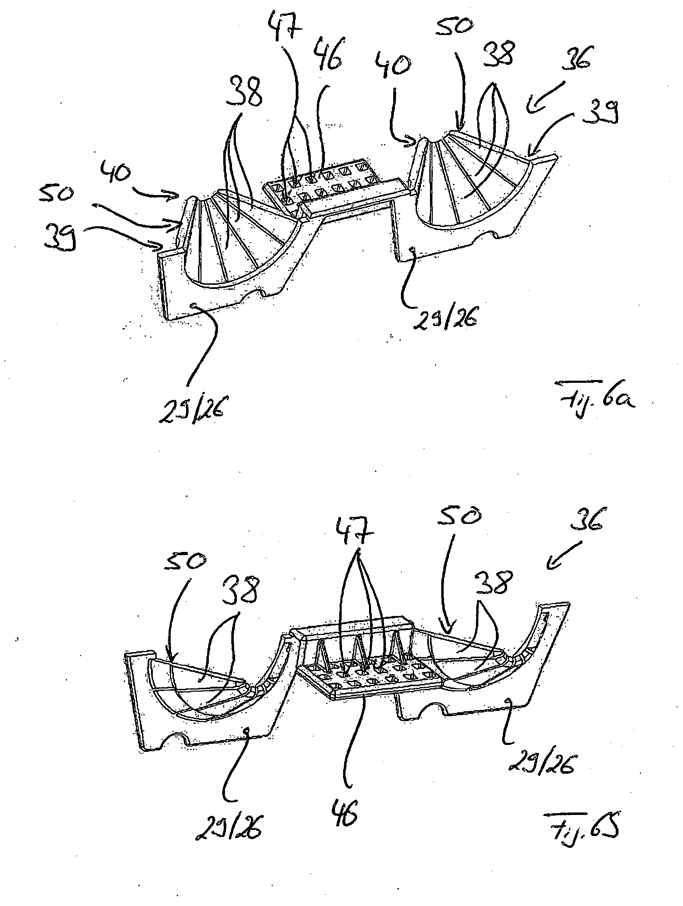

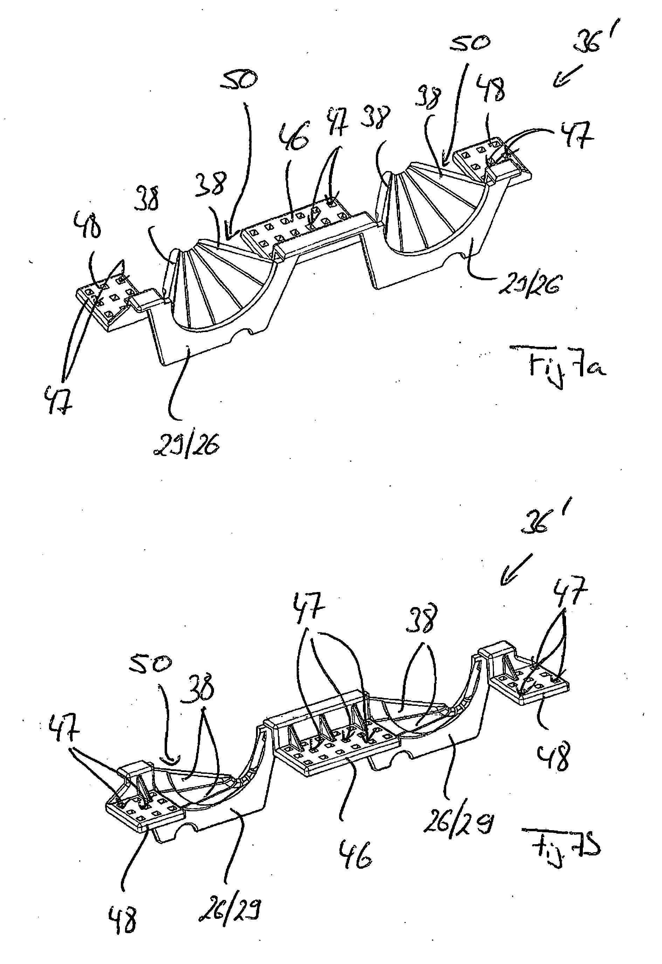

At least the barrier walls 26 of the half-shells 11, 12 facing the interior 14 of the cable closure 10 comprise in the region of each cable insertion region 17 spring elements 35, 36, 36' with resilient fingers 37, 38 or flaps, whereby the resilient fingers 37, 38 or flaps of the spring elements 35, 36 are embedded in the respective compressible and/or deformable sealing element 23, 24 positioned between the respective barrier wall 26 facing the interior 14 of the cable closure and the respective barrier wall 25 remote from the interior 14 of the cable closure. Figures 5a, 5b show a preferred embodiment of spring element 35 used in the region of the lower half-shell 11 and figures 6a, 6b as well as figures 7a, 7b show preferred embodiments of spring elements 36, 36' used in the region of the upper half-shell 12. Figures 3b and 4b show the spring element 35, 36 having the resilient fingers 37, 38 or flaps being embedded in the respective compressible and/or deformable sealing element 23, 24 in dotted lines.

The spring elements 35, 36, 36' having the resilient fingers 37, 38 or flaps being embedded in the respective compressible and/or deformable sealing element 23, 24 are an integral part of the or each respective second segment 29 of the respective barrier wall 26. The resilient fingers 37, 38 or flaps provide fans 49, 50. The fans 49, 50 have generally narrowing cross section. The fans 49, 50 are preferably conically shaped.

First ends 39 of the resilient fingers 37, 38 or flaps of the spring elements 35, 36 are attached to the respective second segment 29 of the respective barrier wall 26 and opposing free second ends 40 of the resilient fingers 37, 38 or flaps of the spring elements 35, 36 can be moved relative to each other. As mentioned above, the resilient fingers 37, 38 or flaps of the spring elements are embedded in and thereby completely surrounded by the respective compressible and/or deformable sealing element 23, 24.

The embedded resilient fingers 37, 38 or flaps of the spring elements 35, 36 keep the respective compressible and/or deformable sealing element 23, 24 in place during operation or during testing of the cable closure 10. The embedded resilient fingers 37, 38 or flaps of the spring elements 35, 36 decrease an axial sliding of the respective sealing element 23, 24 which may be caused by thermal expansion of the respective sealing element 23, 24. This minimizes the risk that the sealing elements 23, 24 become damaged during operation or testing and improves the sealing properties of the cable closure 10.

The embedded resilient fingers 37, 38 or flaps of the spring elements 35, 36 and the cable insertion direction of the respective cable insertion region 17 confine an angle between 20° and 70°, preferably between 30° and 60°, thereby proving the narrowing cross section of the fans 49, 50 provided by the resilient fingers 37, 38 or flaps.

As shown in figures 3a and 3b, the sealing elements 23, 24 in which the resilient fingers 37, 38 or flaps of the spring elements 35, 36 are embedded comprise adjacent to the embedded resilient fingers 37, 28 or flaps of each spring element 35, 36 recesses 41 having a generally narrowing cross section. The recesses 41 are like the fans 49, 50 preferably conically shaped.

At least in the region of the barrier walls 26 facing the interior 14 of the cable closure there is such a recess 41 in the region of each cable insertion region 17 adjacent to the embedded resilient fingers 37, 28 or flaps of the respective spring element 35, 36, 36'. This improves further the sealing properties of the cable closure 10. When sealing a cable, the material of the respective sealing element 23, 24 can be pushed into the recesses 41 thereby avoiding a so called "Eye-ball effect". The so called "Eye-ball effect" affects negatively the sealing properties by a bulge of the material of the respective sealing element 23, 24 along the cable thereby causing a gap between the cable and the respective sealing element 23, 24. This "Eye-ball effect" can be avoided. The recesses 41 allow the handling and sealing of cables with different cable diameters.

In addition to the recesses 41 of the sealing elements 23, 24 provided adjacent to the embedded resilient fingers 37, 38 or flaps of the spring elements 35, 36, 36', the sealing elements 23, 24 have in the area of the cable insertion regions 17 additional recesses 42. Each of the additional recesses 42 has at least three subsections, namely a first subsection 43 and a second subsection 44 both having a generally narrowing cross section, preferably both being conically shaped, in such a way that a tapered end of the first subsection 43 is facing a tapered end of the second subsection 44, and a third subsection 45 preferably being almost cylindrically shaped extending between the tapered end of the first subsection 43 and the tapered end of the second subsection 44. When sealing a cable, the material of the sealing elements 23, 24 can additionally be pushed into the additional recesses 42 thereby further avoiding the so called "Eye-ball effect".

As mentioned above, the so called "Eye-ball effect" affects negatively the sealing properties by a material bulge of the respective sealing element 23, 24 along the cable thereby causing a gap between the cable and the respective sealing element 23, 24. This "Eye-ball effect" can be avoided.

The additional recesses 42 further improve the handling and sealing of cables with different cable diameters. The third subsection 45 of the additional recesses 42 holds a defined sealing pressure on the cable.

By comparing e.g. figures 5a and 6a it can be determined that the resilient fingers 37 or flaps of the spring elements 35 being embedded in the compressible and/or deformable sealing elements 23 of the lower half-shell 11 have a shorter length than the resilient fingers 38 or flaps of the spring elements 36 being embedded in the compressible and/or deformable sealing elements 24 of the upper half-shell 12. The lengths of the resilient fingers 37, 38 or flaps are adapted to the distances x and y between the barrier walls 25, 26. The length I of the shorter fingers 37 is preferably in the flowing range: 0,1≤I/x≤0,3. The length I of the longer fingers 38 is preferably in the flowing range: 0,1≤I/y≤0,3.

As shown in figures 6a, 6b and figures 7a, 7b, each barrier wall 26 of the upper half-shell 12 facing the interior 14 of the cable closure 10, namely the respective second segment 29 of the respective barrier wall 26, comprises between two adjacent spring elements 36 of the same a protrusion 46 being embedded in the compressible and/or deformable sealing element 24 positioned between the respective barrier wall 26 facing the interior 14 of the cable closure and the respective barrier wall 25 remote from the interior 14 of the cable closure 10. The protrusion 46 is formed plate-like or generally flat having a pattern of openings 47 extending through the same.

The embedded protrusions 46 also keep the compressible and/or deformable sealing element 24 in place during operation or during testing of the cable closure 10. The embedded protrusions 46 decrease a radial sliding of the respective sealing element 24 which may be caused by thermal expansion of the compressible and/or deformable sealing element 24. This further minimizes the risk that the sealing elements 24 become damaged during operation or testing and improves further the sealing properties of the cable closure 10.

In the embodiment shown in figures 7a, 7b, each barrier wall 26 of the upper half-shell 12 facing the interior 14 of the cable closure comprises on each side of each spring element 36' a protrusion 46, 48 being embedded in the respective sealing element 24 positioned between the respective barrier wall 26 facing the interior 14 of the cable closure and the respective barrier wall 25 remote from the interior 14 of the cable closure. The protrusions 46, 48 are plate-like or generally flat having a pattern of openings 47 extending through the same.

The protrusions 48 and the protrusion 46 are preferably positioned in a common plane.

Alternatively, the only the lateral protrusions 48 are positioned in a common plane but in a different plane than the middle protrusion 46.

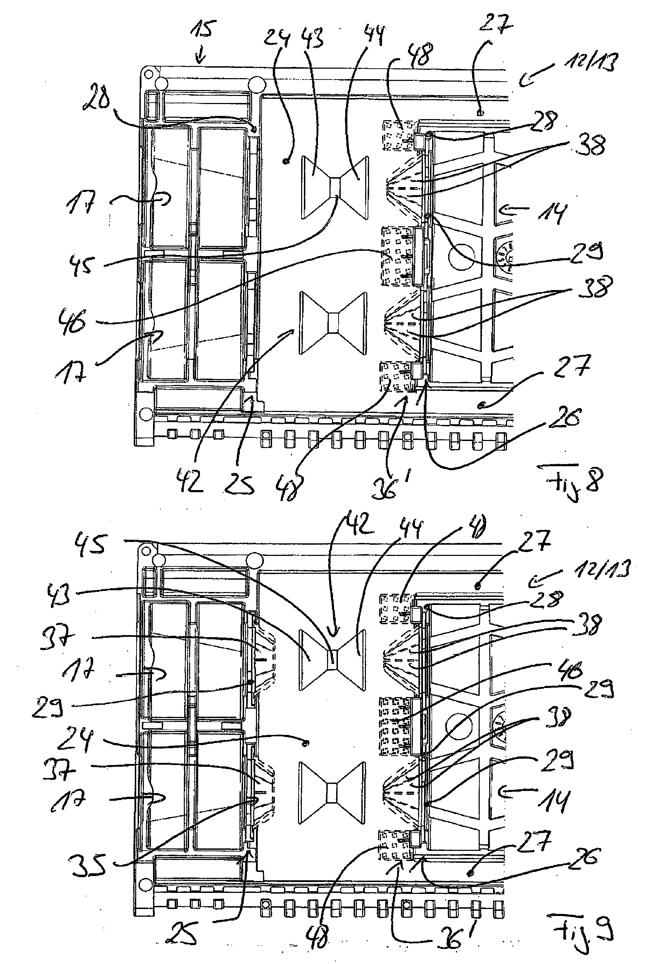

Figure 8 shows a detail similar to figure 3b, whereby the in figure 3b the spring element 36 of figures 6a, 6b and in figure 8 the spring element 36' of figures 7a, 7b are used in the region of the barrier walls 26 of the upper half-shell 12 facing the interior 14 of the cable closure.

Figure 9 shows an embodiment in which also the barrier walls 25 of the upper half-shell 12 remote the interior 14 of the cable closure comprise in the region of each cable insertion region 17 spring elements 35 with resilient fingers 37 or flaps, whereby the resilient fingers 37 or flaps of the spring elements 35 are embedded in the respective sealing element 24 positioned between the respective barrier wall 26 facing the interior 14 of the cable closure and the respective barrier wall 25 remote from the interior 14 of the cable closure. In other words, in figure 9 each barrier wall, namely the barrier walls 26 facing the interior 14 of the cable closure and the barrier walls 25 remote from the interior 14 of the cable closure, of the upper-half shell 12 comprises in the region of each cable insertion region 17 spring elements 35, 36' with resilient fingers 37, 38 or flaps being embedded in the respective sealing element 23, 24 positioned between the respective barrier walls 25, 26.

The resilient fingers 38 or flaps associated with the barrier walls 26 of the upper half-shell 12 facing the interior 14 of the cable closure have a larger length than the resilient fingers 37 or flaps associated with the barrier walls 25 of the upper half-shell 12 remote from the interior 14 of the cable closure. The resilient fingers 37 or flaps associated with the barrier walls 25 of the upper half-shell 12 remote from the interior 14 of the cable closure have the same length like the resilient fingers 37 or flaps associated with the barrier walls 26 of the lower half-shell 11 facing the interior 14 of the cable closure.

In other words, the spring elements 35 associated with the barrier walls 25 of the upper half-shell 12 remote the interior 14 of the cable closure correspond to the spring elements 35 shown in figures 5a, 5b used in the region of the lower half-shell 11.

### List of reference numerals

- 10: inline cable closure
- 11: shell/lower half-shell
- 12: shell/upper half-shell
- 13: covering body
- 14: interior
- 15: side
- 16: side
- 17: cable insertion region
- 18: longitudinal side
- 19: longitudinal side
- 20: hinge
- 21: longitudinal side
- 22: longitudinal side
- 23: sealing element
- 24: sealing element
- 25: barrier wall
- 26: barrier wall
- 27: sealing element
- 28: first segment
- 29: second segment
- 30: pocket-like opening
- 31: middle section
- 32: protrusion
- 33: edge
- 34: edge
- 35: spring element
- 36: spring element
- 36': spring element
- 37: resilient finger
- 38: resilient finger
- 39: first end
- 40: second end
- 41: recess
- 42: additional recess
- 43: first subsection
- 44: second subsection
- 45: third subsection
- 46: protrusion
- 47: opening
- 48: protrusion
- 49: fan
- 50: fan

## Claims

1. A cable closure, having a housing, which delimits an interior of the cable closure and seals off the cable closure toward the outside, the housing comprising a covering body (13), the covering body (13) comprises shells (11, 12) and provides on mutually opposite sides (15, 16) of the same cable insertion regions (17) for inserting cables into the interior of the cable closure and/or for passing cables out of the interior of the cable closure, wherein compressible and/or deformable sealing elements (23, 24) are positioned at the mutually opposite sides (15, 16) of the covering body (13) in the region of the cable insertion regions (17) of the shells (11, 12), wherein each of the sealing elements (23, 24) is positioned between barrier walls (25, 26) of the respective shell (11, 12), namely between a barrier wall (26) facing the interior (14) of the cable closure and a barrier wall (25) remote from the interior (14) of the cable closure, and wherein at least the barrier walls (26) of the shells (11, 12) facing the interior (14) of the cable closure comprise in the region of each cable insertion region (17) spring elements (35, 36, 36') with resilient fingers (37, 38) or flaps, whereby the resilient fingers (37, 38) or flaps of the spring elements (35, 36) are embedded in the respective sealing element (23, 24) positioned between the respective barrier wall (26) facing the interior (14) of the cable closure and the respective barrier wall (25) remote from the interior of the cable closure, **characterized in that**
in the region of each of the mutually opposite sides (15, 16) of a first one of the shells (11) of the covering body (13) the distance (x) between the respective barrier wall (26) facing the interior (14) of the cable closure and the respective barrier wall (25) remote from the interior (14) of the cable closure is smaller than the respective distance (y) between the barrier walls (25, 26) in the region of each of the mutually opposite sides (15, 16) of a second one of the shells (12) of the covering body (13), and
each barrier wall (26), namely a second segment (29) of the same, of the second one of the shells (12) facing the interior (14) of the cable closure comprises between two adjacent spring elements (36, 36') a protrusion (46) being embedded in the respective sealing element (24) positioned between the respective barrier wall (26) facing the interior (14) of the cable closure and the respective barrier wall (25) remote from the interior (14) of the cable closure.

2. The cable closure as claimed in claim 1, **characterized in that** each barrier wall (25, 26) of said shells (11, 12) comprises a first segment (28) being fixedly attached to the respective shell and at least one second segment (29) being a separate component from the respective first segment (28), whereby the spring elements (35, 36, 36') are an integral part of the or each respective second segment (29).

3. The cable closure as claimed in claim 1 or 2, **characterized in that** the sealing elements (23, 24), in which the resilient fingers (37, 38) or flaps of the spring elements (35, 36, 36') are embedded, comprise, at least in the region of the barrier walls (26) facing the interior (14) of the cable closure adjacent to the embedded resilient fingers (37, 38), recesses (41) having a generally narrowing cross section.

4. The cable closure as claimed in one of claims 1 to 3, **characterized in that** each barrier wall (25, 26) of each of the shells (11, 12) extends almost transversely with respect to a cable insertion direction of the respective cable insertion region (17).

5. The cable closure as claimed in one of claims 1 to 4, **characterized in that** the resilient fingers (37, 38) or flaps of the spring elements (35, 36, 36') provide resilient fans (49, 50), whereby the fans (49, 50) have a generally narrowing cross section. spring elements (35, 36, 36') with resilient fingers (37, 38) or flaps being embedded in the respective sealing element (23, 24) positioned between the respective barrier walls (25, 26).

11. The cable closure as claimed in claim 10, **characterized in that** the resilient fingers (38) or flaps associated with the barrier walls (26) of the second one of the shells (12) facing the interior (14) of the cable closure have a larger length than the resilient fingers (37) or flaps associated with the barrier walls (25) of the second one of the shells (12) remote from the interior (14) of the cable closure.

12. The cable closure as claimed in claim 10, **characterized in that** the resilient fingers (37) or flaps associated with the barrier walls (25) of the second one of the shells (12) remote from the interior (14) of the cable closure have the same length like the resilient fingers (37) or flaps associated with the barrier walls (26) of the first one of the shells (11) facing the interior (14) of the cable closure.

13. The cable closure as claimed in one of claims 1 to 12, **characterized in that** edges (33) of the barrier walls (25, 26) of the first one of the shells (11) extending transversely with respect to the insertion direction of the cable insertion regions (17) contact, namely compress and/or deform, the respective sealing element (24) positioned between of the barrier walls (25, 26) of the second one of the shells (12) when the covering body (13) of the housing is closed.

## Patentansprüche

1. Kabelmuffe mit einem Gehäuse, das einen Innenraum der Kabelmuffe begrenzt und die Kabelmuffe nach außen hin abdichtet, wobei das Gehäuse einen Mantelkörper (13) umfasst, wobei der Mantelkörper (13) Schalen (11, 12) umfasst und auf einander gegenüberliegenden Seiten (15, 16) Kabeleinführbereiche (17) zum Einführen von Kabeln in den Innenraum der Kabelmuffe und/oder zum Herausführen von Kabeln aus dem Innenraum der Kabelmuffe bereitstellt, wobei zusammendrückbare und/oder verformbare Abdichtelemente (23, 24) an den einander gegenüberliegenden Seiten (15, 16) des Mantelkörpers (13) im Bereich der Kabeleinführbereiche (17) der Schalen (11, 12) angeordnet sind, wobei jedes der Abdichtelemente (23, 24) zwischen Trennwänden (25, 26) der jeweiligen Schale (11, 12), nämlich zwischen einer Trennwand (26), die zum Innenraum (14) der Kabelmuffe weist, und einer Trennwand (25), die entfernt von dem Innenraum (14) der Kabelmuffe ist, angeordnet ist, und wobei mindestens die Trennwände (26) der Schalen (11, 12), die zum Innenraum (14) der Kabelmuffe weisen, in dem Bereich jedes Kabeleinführbereichs (17) Federelemente (35, 36, 36') mit elastischen Fingern (37, 38) oder Klappen aufweisen, wobei die elastischen Finger (37, 38) oder Klappen der Federelemente (35, 36) in dem entsprechenden Abdichtelement (23, 24) eingebettet sind, das zwischen der entsprechenden Trennwand (26), welche zum Innenraum (14) der Kabelmuffe weist, und der entsprechenden Trennwand (25), die entfernt vom Innenraum der Kabelmuffe ist, angeordnet ist, **dadurch gekennzeichnet, dass**
in dem Bereich jeder der einander gegenüberliegenden Seiten (15, 16) einer ersten der Schalen (11) des Mantelkörpers (13) der Abstand (x) zwischen der jeweiligen Trennwand (26), die zum Innenraum (14) der Kabelmuffe weist, und der jeweiligen Trennwand (25), die entfernt von dem Innenraum (14) der Kabelmuffe ist, kleiner als der entsprechende Abstand (y) zwischen den Trennwänden (25, 26) im Bereich der einander gegenüberliegende Seiten (15, 16) einer zweiten der Schalen (12) des Mantelkörpers (13) ist, und
jede Trennwand (26), nämlich ein zweites Segment (29) davon, einer zweiten der Schalen (12), die zu dem Innenraum (14) der Kabelmuffe weist, zwischen zwei benachbarten Federelementen (36, 36') einen Vorsprung (46) umfasst, der in dem jeweiligen Abdichtelement (24), das zwischen der jeweiligen Trennwand (26), die zu dem Innenraum (14) der Kabelmuffe weist, und der jeweiligen Trennwand (25), die entfernt von dem Innenraum (14) der Kabelmuffe ist, eingebettet ist.

2. Kabelmuffe nach Anspruch 1, **dadurch gekennzeichnet, dass** jede Trennwand (25, 26) der Schalen (11, 12) ein erstes Segment (28), das fest an der jeweiligen Schale befestigt ist, und mindestens ein zweites Segment (29), das eine separate Komponente von dem jeweiligen ersten Segment (28) ist, umfasst, wobei die Federelemente (35, 36, 36') ein integraler Bestandteil des oder jedes entsprechenden zweiten Segments (29) sind.

3. Kabelmuffe nach Anspruch 1 oder 2, **dadurch gekennzeichnet, dass** die Abdichtelemente (23, 24), in welche die elastischen Finger (37, 38) oder Klappen der Federelemente (35, 36, 36') eingebettet sind, mindestens im Bereich der Trennwände (26), die zum Innenraum (14) der Kabelmuffe weisen, benachbart zu den eingebetteten elastischen Fingern (37, 38) Ausnehmungen (41) umfassen, die einen sich im Allgemeinen verjüngenden Querschnitt aufweisen.

4. Kabelmuffe nach einem der Ansprüche 1 bis 3, **dadurch gekennzeichnet, dass** sich jede Trennwand (25, 26) jeder der Schalen (11, 12) nahezu quer zu einer Kabeleinführrichtung des entsprechenden Kabeleinführbereichs (17) erstreckt.

5. Kabelmuffe nach einem der Ansprüche 1 bis 4, **dadurch gekennzeichnet, dass** die elastischen Finger (37, 38) bzw. Klappen der Federelemente (35, 36, 36') elastische Schaufeln (49, 50) bereitstellen, wobei die Schaufeln (49, 50) einen sich im Allgemeinen verjüngenden Querschnitt aufweisen.

6. Kabelmuffe nach einem der Ansprüche 1 bis 5, **dadurch gekennzeichnet, dass** die elastischen Finger (37, 38) der Federelemente (35, 36, 36') und eine Kabeleinführrichtung des entsprechenden Kabeleinführbereichs (17) einen Winkel zwischen 20° und 70° eingrenzen.

7. Kabelmuffe nach einem der Ansprüche 1 bis 6, **dadurch gekennzeichnet, dass** die elastischen Finger (37) oder Klappen der Federelemente (35), die in den zusammendrückbaren und/oder verformbaren Abdichtelementen (24) der zweiten der Schalen (12) eingebettet sind, mindestens im Bereich der Trennwände (26), die zum Innenraum (14) der Kabelmuffe weisen, eine größere Länge als die elastischen Finger (38) oder Klappen der Federelemente (36, 36') aufweisen, die in den zusammendrückbaren und/oder verformbaren Abdichtelementen (24) der ersten der Schalen (11) eingebettet sind.

8. Kabelmuffe nach einem der Ansprüche 1 bis 7, **dadurch gekennzeichnet, dass** jede Trennwand (26), nämlich das zweite Segment (29) davon, einer zweiten der Schalen (12), die zu dem Innenraum (14) der Kabelmuffe weist, auf jeder Seite jedes Federelements (36') einen Vorsprung (46, 48) umfasst, der in dem jeweiligen Abdichtelement (24), das zwischen der jeweiligen Trennwand (26), die zu dem Innenraum (14) der Kabelmuffe weist, und der jeweiligen Trennwand (25), die entfernt von dem Innenraum (14) der Kabelmuffe ist, angeordnet ist, eingebettet ist.

9. Kabelmuffe nach einem der Ansprüche 1 bis 8, **dadurch gekennzeichnet, dass** der oder jeder Vorsprung (46, 48) plattenartig ist und ein Muster von Öffnungen (47) aufweist, die sich durch denselben erstrecken.

10. Kabelmuffe nach einem der Ansprüche 1 bis 9, **dadurch gekennzeichnet, dass** jede Trennwand (25, 26), nämlich die Trennwände (26), die zum Innenraum (14) der Kabelmuffe weisen, und die Trennwände (25), die entfernt von dem Innenraum (14) der Kabelmuffe sind, der zweiten der Schalen (12) in dem Bereich jedes Kabeleinführbereichs (17) Federelemente (35, 36, 36') mit elastischen Fingern (37, 38) oder Klappen umfasst, die in dem jeweiligen Abdichtelement (23, 24), das zwischen den jeweiligen Trennwänden (25, 26) angeordnet ist, eingebettet sind.

11. Kabelmuffe nach Anspruch 10, **dadurch gekennzeichnet, dass** die elastischen Finger (38) oder Klappen, die mit den Trennwänden (26) der zweiten der Schalen (12) verbunden sind, die zum Innenraum (14) der Kabelmuffe weisen, eine größere Länge als die elastischen Finger (37) oder Klappen aufweisen, die mit den Trennwänden (25) der zweiten der Schalen (12) verbunden sind, die entfernt von dem Innenraum (14) der Kabelmuffe sind.

12. Kabelmuffe nach Anspruch 10, **dadurch gekennzeichnet, dass** die elastischen Finger (37) oder Klappen, die mit den Trennwänden (25) der zweiten der Schalen (12) verbunden sind, die entfernt vom Innenraum (14) der Kabelmuffe ist, die gleiche Länge wie die elastischen Finger (37) oder Klappen aufweisen, die mit den Trennwänden (26) der ersten der Schalen (11) verbunden sind, die zum Innenraum (14) der Kabelmuffe weisen.

13. Kabelmuffe nach einem der Ansprüche 1 bis 12, **dadurch gekennzeichnet, dass** Ränder (33) der Trennwände (25, 26) der ersten der Schalen (11), die sich quer in Bezug auf die Einführrichtung der Kabeleinführbereiche (17) erstrecken, mit dem entsprechenden Abdichtelement (24), das zwischen den Trennwänden (25, 26) der zweiten der Schalen (12) angeordnet ist, wenn der Mantelkörper (13) des Gehäuses geschlossen ist, in Kontakt treten, nämlich zusammendrücken und/oder verformen.

## Revendications

1. Fermeture de câble présentant un boîtier qui délimite un intérieur de la fermeture de câble et qui isole hermétiquement la fermeture de câble vis-à-vis de l'extérieur, le boîtier comprenant un corps de recouvrement (13), le corps de recouvrement (13) comprenant des coques (11, 12) et présentant sur des côtés mutuellement opposés (15, 16) de celles-ci des régions d'insertion de câble (17) pour insérer des câbles dans l'intérieur de la fermeture de câble et/ou pour faire passer des câbles hors de l'intérieur de la fermeture de câble, des éléments d'étanchéité compressibles et/ou déformables (23, 24) étant positionnés au niveau des côtés mutuellement opposés (15, 16) du corps de recouvrement (13) dans la région des régions d'insertion de câble (17) des coques (11, 12), chacun des éléments d'étanchéité (23, 24) étant positionné entre des parois formant barrière (25, 26) de la coque respective (11, 12), à savoir entre une paroi formant barrière (26) tournée vers l'intérieur (14) de la fermeture de câble et une paroi formant barrière (25) détournée de l'intérieur (14) de la fermeture de câble, et au moins les parois formant barrière (26) des coques (11, 12) tournées vers l'intérieur (14) de la fermeture de câble comprenant, dans la région de chaque région d'insertion de câble (17), des éléments de ressort (35, 36, 36') ayant des doigts élastiques (37, 38) ou des volets, les doigts élastiques (37, 38) ou les volets des éléments de ressort (35, 36) étant incorporés dans l'élément d'étanchéité respectif (23, 24) positionné entre la paroi formant barrière respective (26) tournée vers l'intérieur (14) de la fermeture de câble et la paroi formant barrière respective (25) détournée de l'intérieur de la fermeture de câble, **caractérisée en ce que**
dans la région de chacun des côtés mutuellement opposés (15, 16) d'une première des coques (11) du corps de recouvrement (13), la distance (x) entre la paroi formant barrière respective (26) tournée vers l'intérieur (14) de la fermeture de câble et la paroi formant barrière respective (25) détournée de l'intérieur (14) de la fermeture de câble est inférieure à la distance respective (y) entre les parois formant barrière (25, 26) dans la région de chacun des côtés mutuellement opposés (15, 16) d'une deuxième des coques (12) du corps de recouvrement (13), et
chaque paroi formant barrière (26), à savoir un deuxième segment (29) de celle-ci, de la deuxième des coques (12) tournée vers l'intérieur (14) de la fermeture de câble comprend, entre deux éléments de ressort adjacents (36, 36'), une saillie (46) incorporée dans l'élément d'étanchéité respectif (24) positionné entre la paroi formant barrière respective (26) tournée vers l'intérieur (14) de la fermeture de câble et la paroi formant barrière respective (25) détournée de l'intérieur (14) de la fermeture de câble.

2. Fermeture de câble selon la revendication 1, **caractérisée en ce que** chaque paroi formant barrière (25, 26) desdites coques (11, 12) comprend un premier segment (28) qui est attaché fixement à la coque respective et au moins un deuxième segment (29) qui est un composant séparé du premier segment respectif (28), les éléments de ressort (35, 36, 36') faisant partie intégrante du ou de chaque deuxième segment respectif (29).

3. Fermeture de câble selon la revendication 1 ou 2, **caractérisée en ce que** les éléments d'étanchéité (23, 24), dans lesquels sont incorporés les doigts élastiques (37, 38) ou volets des éléments de ressort (35, 36, 36'), comprennent, au moins dans la région des parois formant barrière (26) tournées vers l'intérieur (14) de la fermeture de câble, en position adjacente aux doigts élastiques incorporés (37, 38), des retraits (41) ayant une section transversale allant généralement en se rétrécissant.

4. Fermeture de câble selon l'une quelconque des revendications 1 à 3, **caractérisée en ce que** chaque paroi formant barrière (25, 26) de chacune des coques (11, 12) s'étend presque transversalement par rapport à une direction d'insertion de câble de la région d'insertion de câble respective (17).

5. Fermeture de câble selon l'une quelconque des revendications 1 à 4, **caractérisée en ce que** les doigts élastiques (37, 38) ou volets des éléments de ressort (35, 36 36') fournissent des éventails élastiques (49, 50), les éventails (49, 50) ayant une section transversale allant généralement en se rétrécissant.

6. Fermeture de câble selon l'une quelconque des revendications 1 à 5, **caractérisée en ce que** les doigts élastiques (37, 38) des éléments de ressort (35, 36, 36') et une direction d'insertion de câble de la région d'insertion de câble respective (17) délimitent un angle compris entre 20° et 70°.

7. Fermeture de câble selon l'une quelconque des revendications 1 à 6, **caractérisée en ce que** les doigts élastiques (37) ou volets des éléments de ressort (35) incorporés dans les éléments d'étanchéité compressibles et/ou déformables (24) de la deuxième des coques (12) présentent au moins dans la région des parois formant barrière (26) tournées vers l'intérieur (14) de la fermeture de câble une plus grande longueur que les doigts élastiques (38) ou volets des éléments de ressort (36, 36') incorporés dans les éléments d'étanchéité compressibles et/ou déformables (24) de la première des coques (11).

8. Fermeture de câble selon l'une quelconque des revendications 1 à 7, **caractérisée en ce que** chaque paroi formant barrière (26), à savoir le deuxième segment (29) de celle-ci, de la deuxième des coques (12) tournée vers l'intérieur (14) de la fermeture de câble comprend sur chaque côté de chaque élément de ressort (36') une saillie (46, 48) incorporée dans l'élément d'étanchéité respectif (24) positionné entre la paroi formant barrière respective (26) tournée vers l'intérieur (14) de la fermeture de câble et la paroi formant barrière respective (25) détournée de l'intérieur (14) de la fermeture de câble.

9. Fermeture de câble selon l'une quelconque des revendications 1 à 8, **caractérisée en ce que** la ou chaque saillie (46, 48) est de type plaque avec un motif d'ouvertures (47) s'étendant à travers elle.

10. Fermeture de câble selon l'une quelconque des revendications 1 à 9, **caractérisée en ce que** chaque paroi formant barrière (25, 26), à savoir les parois formant barrière (26) tournées vers l'intérieur (14) de la fermeture de câble et les parois formant barrière (25) détournées de l'intérieur (14) de la fermeture de câble, de la deuxième des coques (12) comprend, dans la région de chaque région d'insertion de câble (17), des éléments de ressort (35, 36, 36') avec des doigts élastiques (37, 38) ou volets incorporés dans l'élément d'étanchéité respectif (23, 24) positionné entre les parois formant barrière respectives (25, 26).

11. Fermeture de câble selon la revendication 10, **caractérisée en ce que** les doigts élastiques (38) ou volets associés aux parois formant barrière (26) de la deuxième des coques (12) tournée vers l'intérieur (14) de la fermeture de câble présentent une plus grande longueur que les doigts élastiques (37) ou volets associés aux parois formant barrière (25) de la deuxième des coques (12) détournée de l'intérieur (14) de la fermeture de câble.

12. Fermeture de câble selon la revendication 10, **caractérisée en ce que** les doigts élastiques (37) ou volets associés aux parois formant barrière (25) de la deuxième des coques (12) détournée de l'intérieur (14) de la fermeture de câble ont la même longueur que les doigts élastiques (37) ou volets associés aux parois formant barrière (26) de la première des coques (11) tournée vers l'intérieur (14) de la fermeture de câble.

13. Fermeture de câble selon l'une quelconque des revendications 1 à 12, **caractérisée en ce que** des bords (33) des parois formant barrière (25, 26) de la première des coques (11) s'étendant transversalement par rapport à la direction d'insertion des régions d'insertion de câble (17) viennent en contact, à savoir compriment et/ou déforment, l'élément d'étanchéité respectif (24) positionné entre les parois formant barrière (25, 26) de la deuxième des coques (12) lorsque le corps de recouvrement (13) du boîtier est fermé.
